# EUROPÄISCHE PATENTSCHRIFT

(11) **EP 2 696 480 B1**
(45) Veröffentlichungstag und Bekanntmachung des Hinweises auf die Patenterteilung: **19.05.2021**
(21) Anmeldenummer: 13178556.0
(22) Anmeldetag: 30.07.2013
(51) Int. Cl.: H02K 5/10, H02K 5/173, H02K 7/14, F04D 25/06, F04D 29/08, F04D 29/32, H02K 21/22

(54) **Elektronisch kommutierter Außenläufermotor**
Electronically commutated outer rotor motor
Moteur à rotor extérieur commuté électroniquement

(30) Priorität: 11.08.2012 DE 102012015960
(43) Veröffentlichungstag der Anmeldung: 12.02.2014
(73) Patentinhaber: EBM-PAPST ST. GEORGEN GMBH & CO. KG, 78112 St. Georgen (DE)
(72) Erfinder: Kuhnert, Gerhard, 78048 VS-Villingen (DE)
(74) Vertreter: Staeger & Sperling Partnerschaftsgesellschaft mbB

(56) Entgegenhaltungen:
- EP-A1- 0 732 529
- EP-A1- 1 503 479
- EP-A2- 2 355 309
- WO-A2-2011/045697
- DE-C1- 19 739 001

## Beschreibung

Die Erfindung betrifft einen elektronisch kommutierten Außenläufermotor, welcher einen Innenstator und einen glockenartigen Außenrotor aufweist, der durch einen magnetisch wirksamen Luftspalt vom Innenstator getrennt ist.

Bei solchen Motoren muss für die Verwendung in Umgebungen mit aggressiven Medien, z.B. Feuchtigkeit, Salznebel, Schmutz etc., das Innere des Motors gegen diese Einflüsse geschützt werden.

Aus dem Stand der Technik sind verschiedene Lösungen zum Schutz des Stators bekannt:
Bei einer Lösung wird der Stator mittels eines Harzes oder eines Kunststoffumgusses geschützt. Dabei besteht die Gefahr der Bildung von Lunkern (Hohlräumen) im Umguss, an denen Feuchtigkeit etc. in den Motor eindringen kann. Auch besteht dort die Gefahr eines Wärmestaus innerhalb des Umgusses, wodurch Wärmenester entstehen können, die zu einem vorzeitigen Ausfall des Motors führen. Ferner sind Umgussprozesse anfällig für Fehler, d.h. die Prozesssicherheit lässt in manchen Fällen zu wünschen übrig.

Aus der DE 10 2011 013 662 A1(DE-1054i) ist ein Gerätelüfter bekannt, bei dem ein Lüftergehäuse durch Spritzguss hergestellt wird, wobei der Stator mit dem Werkstoff des Lüftergehäuses umspritzt wird. Dabei wird der Motor - ohne Leiterplatte - zusammen mit dem Lüftergehäuse komplett umspritzt. Aus der Umspritzung ragen nur die Anschlüsse für die Wicklungen heraus. Nach dem Spritzprozess werden diese Anschlüsse mit der Leiterplatte verbunden, und diese kann ihrerseits gegen äußere Einflüsse geschützt werden, z.B. durch Vergießen oder durch Abdichten mit einem Deckel.

Auch diese Lösung hat jedoch den Nachteil, dass Wärme schlecht abfließen kann und der Motor deshalb Gefahr läuft, einem frühen Hitzetod zu erliegen. Zudem bilden sich gelegentlich Risse in der Umspritzung, da unterschiedliche Werkstoffe (z.B. Kupfer, Stahl) mit unterschiedlichen Ausdehnungskoeffizienten fest vom Kunststoff umschlossen sind. Durch diese Risse kann Feuchtigkeit eindringen, wodurch z. B. die Gefahr einer Korrosion entsteht.

Bei einer anderen Lösung soll die Elektronik mechanisch gegen Umwelteinflüsse geschützt werden. Hierbei wird der Stator umspritzt und zusätzlich mit einer Platte versehen, welche einen gummielastischen Dichtring aufweist. Diese Anordnung wird über das Lagerrohr geführt und dichtet auf der Flanschseite die Elektronik in einem abgekapselten Raum ab. Dieser Raum benötigt aber ein Druckausgleichselement, z.B. eine Membran, um bei Temperaturschwankungen, bedingt durch den Druckauf- bzw. -abbau der eingeschlossenen Luft, einen entsprechenden Druckausgleich vornehmen zu können. Diese Variante ist deshalb kostspielig.

Weiterer druckschriftlicher Stand der Technik wird in den Dokumenten
EP 1 503 479 A1, DE 197 39 001 C1, WO 2011/045 697 A2, EP 0 732 529 A1 und EP 2 355 309 A2 offenbart.

Es ist deshalb eine Aufgabe der Erfindung, einen Außenläufermotor zur Verfügung zu stellen, welcher gegen äußere Einflüsse, z.B. Feuchtigkeit, Salznebel, Schmutz etc. gut geschützt ist.

Eine Lösung dieser Aufgabe ergibt sich durch den Gegenstand des Anspruchs 1. Ein erfindungsgemäßer Motor hat an einem Ende des Lagerrohres einen Flansch,
und dieser Flansch, z.B. aus Aluminium, Kunststoff oder Druckguss, kann durch verschiedene Verfahren bearbeitet oder auch im Spritzgussverfahren realisiert werden. Zwischen diesem Flansch und dem Rotor wird zur Abdichtung ein Dichtring vorgesehen. Der Flansch kann z.B. mit einer Ausdrehung zur Aufnahme dieses Ringes versehen sein, oder der Dichtring kann im 2K-Verfahren direkt an der gewünschten Stelle angespritzt werden. Der Vorteil der Erfindung liegt zum einen darin, dass die im Motor erzeugte Wärme über die flexible Lippe nach außen entweichen kann, und zum anderen darin, dass Feuchtigkeit oder Staub schlecht oder gar nicht von außen in den Motor eindringen können, da die Lippe eine Sperre hiergegen bildet. Auch kann so ein kostengünstiges System geschaffen werden, welches sich für viele Motorvarianten eignet.

Die Erfindung setzt keine Dichtung in radialer Bauform voraus; vielmehr kann sie auch in axialer Richtung wirksam sein.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: Eine raumbildliche Explosionsdarstellung eines Elektromotors; bei diesem Beispiel hat er an seinem Innenstator neun ausgeprägte Statorpole, und er dient - als Beispiel - zum Antrieb eines Axiallüfters,
- Fig. 2: den Motor nach Fig. 1 im zusammengebauten Zustand,
- Fig. 3: eine Detailvergrößerung der Einzelheit III der Fig. 2, welche eine bevorzugte Ausführungsform der Abdichtung zwischen Stator und Rotor des Motors der Fig. 1 und Fig. 2 zeigt,
- Fig. 4: eine Draufsicht von oben auf die Motorstruktur der Fig. 2,
- Fig. 5: einen Schnitt durch die Motorstruktur, gesehen längs der Linie V-V der Fig. 4,
- Fig. 6: eine raumbildliche Darstellung des Motors der Fig. 1 und Fig. 2 bei seiner Verwendung zum Antrieb eines Gerätelüfters, und

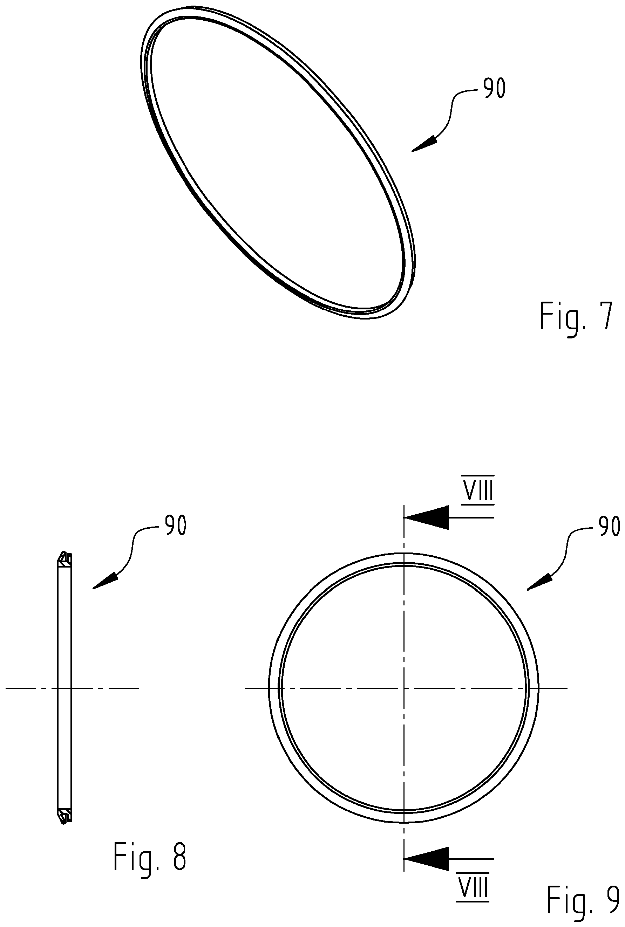

- Fig. 7 bis Fig. 9: eine beispielhafte Darstellung des bei den Fig. 1 bis Fig. 3 verwendeten Lippen-Dichtglieds.

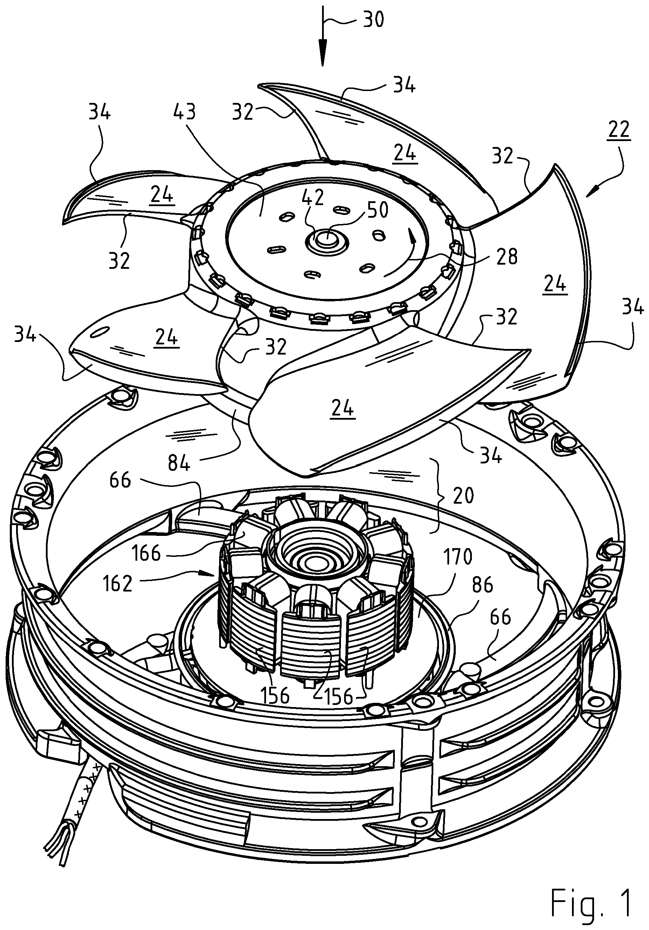

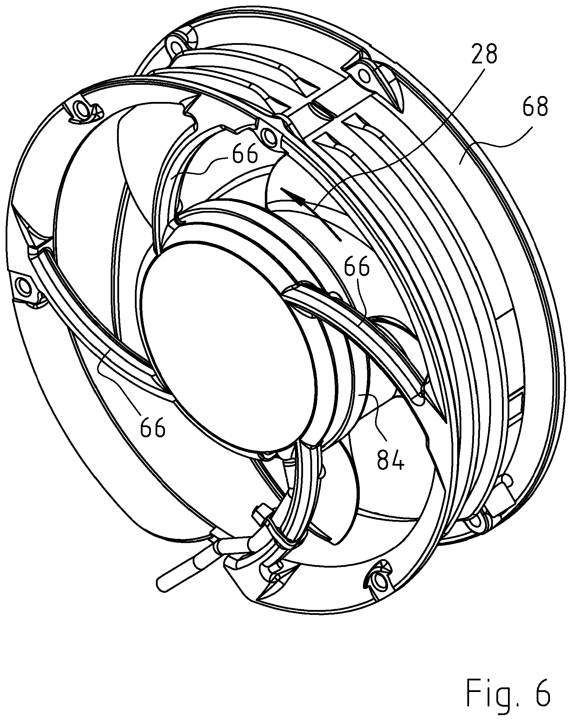

Zur Erläuterung dient ein elektronisch kommutierter Außenläufermotor 20, wie er in den **Fig. 1****,** **Fig. 2** und **Fig. 6** beispielhaft als Antrieb eines Rotors bzw. Lüfterrads 22 mit fünf Lüfterflügeln 24 dargestellt ist bzw. als Antrieb eines Lüfters. Der Rotor 22 hat eine Rotorglocke 26, die bevorzugt aus Kunststoff ausgebildet ist, jedoch auch aus Metall ausgebildet sein kann. Die Flügel 24 sind auf der Außenseite des glockenartigen Rotors 22 oder anders ausgedrückt auf der Außenseite der Rotorglocke 26 des Motors 20 angeordnet. Die Drehrichtung (bei diesem Beispiel von der Flanschseite aus betrachtet entgegen dem Uhrzeigersinn) ist mit 28 bezeichnet, und die Strömungsrichtung der von den Lüfterflügeln 24 transportierten Luft ist mit 30 bezeichnet, in Fig. 1 also von oben nach unten.

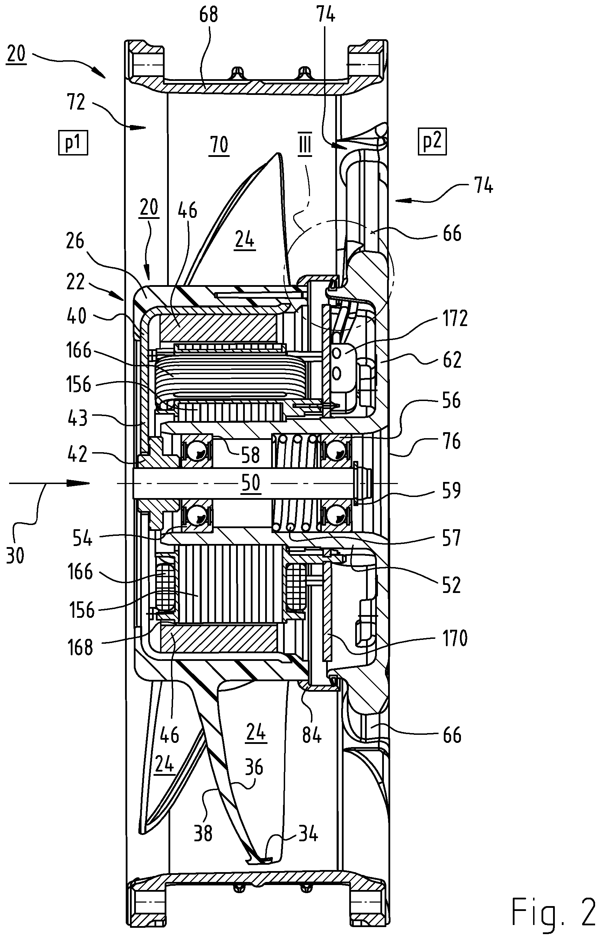

Wie dargestellt, sind die Lüfterflügel bevorzugt 24 gewunden und jeweils an der Vorderseite 32 gesichelt. Sie haben eine sogenannte aerodynamische Querschnittsform (etwa wie ein Flugzeugflügel) und sind an ihrer radial äußeren Kante jeweils mit einem Umströmungshindernis 34 versehen, das verhindern soll, dass Luft von der Druckseite 36 (Fig. 2) des betreffenden Flügels zur Saugseite 38 zurückströmt.

Wie Fig. 2 zeigt, enthält der Rotor 22 ein Flussleitstück 40 aus Weicheisen, das sich zuerst als Rotorboden 43 von einer Buchse 42 des Rotors radial oder schräg nach außen und dann mit einem Teil 44 in Längsrichtung des Rotors 22 erstreckt und als magnetischer Rückschluss für einen z.B. 12-poligen Rotormagneten 46 dient. Bevorzugt wird das Flussleitstück 40 auch an der Rotorglocke 26 befestigt. Das Teil 40/44 ist hier in den Kunststoff 48 des Rotors 22 eingebettet, welcher auch als Träger für die Lüfterflügel (vanes) 24 dient.

Die Buchse 42 dient zur Verbindung des Rotors 22 mit einer Welle (Achse) 50, die in einem Lagerrohr 52 mittels zweier Kugellager 54, 56 gelagert ist. Bei dem in Fig. 2 linken Kugellagers 54 liegt der Außenring gegen eine Schulter 58 auf der Innenseite des Lagerrohres 52 an.

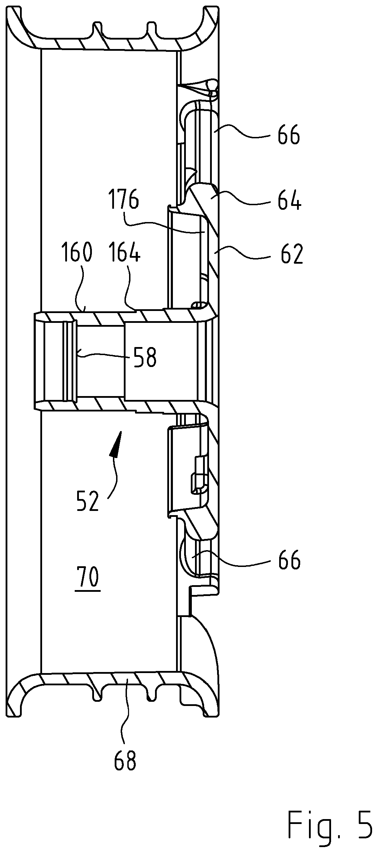

Auf der Außenseite 160 **(****Fig. 5****)** des Lagerrohres 52 ist ein Innenstator 162 befestigt, vgl. Fig. 1. Dazu wird der Innenstator 162 bis zu einer Schulter 164 (Fig. 5) auf das Lagerrohr 52 aufgepresst.

Wie dargestellt, hat der Innenstator 162 neun ausgeprägte Pole 156, die durch einen magnetisch wirksamen Luftspalt 168 von der radialen Innenseite des z.B. 12-poligen Rotormagneten 46 getrennt sind. Die Wicklungen 166 der Pole 156 sind mit einer Leiterplatte 170 verbunden, auf der auch Bauteile 172 für die Kommutierung des Motors 20 vorgesehen sind.

Im Inneren des Lagerrohres 52 sind die beiden Kugellager 54, 56 angeordnet. Bevorzugt ist das Kugellager 56 ein Loslager, das in Fig. 2 durch eine Feder 57 nach rechts in Anlage gegen einen Sprengring 59 gepresst wird. Auf diese Weise werden die beiden Kugellager 54, 56 verspannt:
Die Feder 57 presst den Außenring des Lagers 56 nach rechts, und presst dadurch den Innenring des Lagers 56 ebenfalls nach rechts, in Anlage gegen den Sprengring 59, und presst dadurch die Welle 50 nach rechts, so dass der Innenring des Lagers 54 in Richtung nach rechts beaufschlagt wird und dadurch das Lager 54 nach rechts gegen die Schulter 58 des Lagerrohres 52 presst. Der Sprengring 59 ist in einer Ringnut der Welle 50 befestigt.

Alternativ kann die Anordnung auch so ausgebildet werden, dass die Feder 57 so angeordnet ist, dass sie gegen das Lager 54 presst,

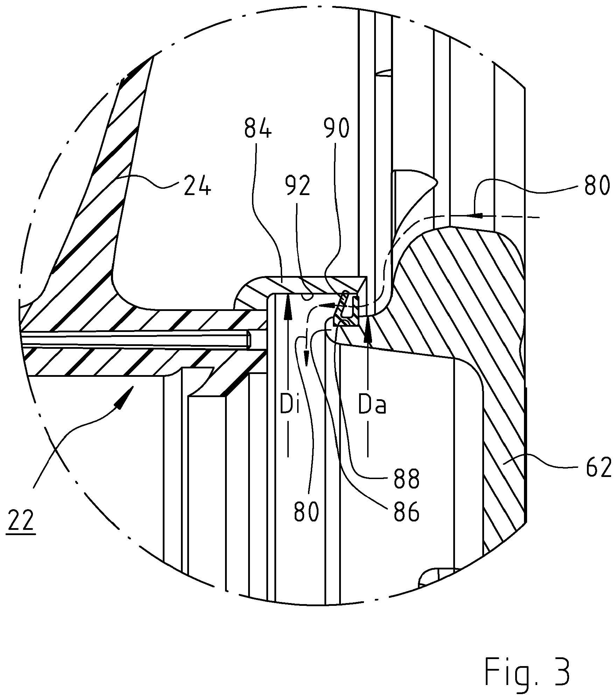

Wie Fig. 5 am besten zeigt, ist das Lagerrohr 52 auf seiner in Fig. 5 rechten Seite mit einem ringförmigen Flansch 62 verbunden, der an seiner Peripherie eine Verdickung 64 hat. Diese bildet mit dem Flansch 62 eine flache Ringnut 176, in welcher die Leiterplatte 170 (Fig. 1 und Fig. 2) angeordnet ist. (Diese ist in Fig. 3 nicht dargestellt).

Bevorzugt ist das gesamte in Fig. 5 gezeigte Teil mit der Wand 68, den Speichen 66 und dem Lagerrrohr 52 einstückig ausgebildet und wird im Lüfter aus Fig. 2 verwendet, es kann aber auch mehrstückig ausgebildet, wie es in Fig. 2 schematisch gezeigt ist.

Die Verdickung 64 ist über von innen nach außen verlaufende Speichen 66 mit der äußeren Wand 68 eines Luftkanals 70 verbunden, in welchem sich im Betrieb die Flügel 24 drehen. - Die gekrümmte Form der Speichen 66 dient der Geräuschreduzierung.

Die Flügel 24 transportieren bei ihrer Drehung die Luft im Luftkanal 70 in der Richtung 30, also in Fig. 2 von links nach rechts. Hierbei erhält man an der Einströmöffnung 72 des Kanals 70 einen niedrigen Druck p1, und an der Ausströmöffnung 74 einen höheren Druck p2, dessen Größe von mehreren Parametern abhängt, z.B. von der Drehzahl des Motors 20.

Der Druckunterschied (p2 - p1) ist bestrebt, eine Ausgleichsströmung von der Ausströmöffnung 74 zur Einströmöffnung 72 zu bewirken, und diese Ausgleichsströmung reduziert den Wirkungsgrad des Ventilators.

Die Strömung durch das Lagerrohr 52 ist schwach und kann dadurch weiter reduziert werden, dass auf die in Fig. 2 rechte Öffnung 74 des Lagerrohrs 72 z.B. ein Typenschild 76 oder eine flexible Membran aufgeklebt wird, um das Schmiermittel der Kugellager 54, 56 vor Austrocknung und Verschmutzung zu schützen und dadurch eine hohe Lebensdauer zu gewährleisten.

Eine zusätzliche Ausgleichsströmung 80 ist in **Fig. 3** schematisch dargestellt. Fig. 3 zeigt eine starke Ausschnittsvergrößerung, (größenordnungsmäßig im Maßstab 5 : 1) durch die Einzelheit III der Fig. 2. Diese zeigt links den Rotor 22, aber ohne den Rotormagneten 46, und einen Flügel 24. Am rechten Ende des Rotors 22 befindet sich in Fig. 3 ein Fortsatz 84, dessen Innendurchmesser Di größer ist als der Außendurchmesser Da des in Fig. 3 linken Endes 86 des Flanschs 62.

An diesem Ende 86 befindet sich eine Ringnut 88, in der ein Dichtring 90 befestigt ist, der erfindungsgemäß mit einer Dichtlippe versehen ist und als Rotationsdichtung, Lippendichtung, Lippengleitdichtung, Dichtlippenring, Trockenlaufdichtung etc. bezeichnet werden kann.

Für diese Dichtung 90 gibt es sehr viele mögliche Ausführungsformen. Herstellerin solcher Dichtungen (hier unter der Marke "SIMRIT") ist z.B. die Firma Freudenberg Simrit GmbH & Co. KG in Weinheim. Die in Fig. 3 dargestellte Form des Dichtprofils hat z.B. zwei Dichtlippen, die durch den Druckunterschied (p2 - p1) gegen die Innenseite 92 des Fortsatzes 84 gepresst werden.

So wird auf einfache und preisgünstige Weise verhindert, dass Feuchtigkeit, Salznebel, Schmutz etc. in den Motor 20 angesaugt werden und diesen korrodieren. Dadurch ergibt sich eine günstige Lebensdauer.

In nicht zur Erfindung gehörenden Abwandlungen und Modifikationen kann der Profilring 90 am Fortsatz 84 so befestigt werden, dass seine Dichtlippen nach innen ragen und gegen das Ende 86 des Flanschs 62 anliegen.

Das Material einer Dichtlippe ist so ausgelegt, dass an ihr bei Drehung der Rotorglocke 26 so gut wie kein Verschleiß auftritt. Das ist das Prinzip des Wellendichtrings. Typische Werkstoffe sind PE oder PTFE.

Der Vorteil hierbei liegt zum einen darin, dass die innerhalb des dreiphasigen Motors 20 erzeugte Wärme (Druckaufbau von innen) über die flexible Lippe 90 nach außen entweichen kann, und zum anderen, dass Feuchtigkeit oder Staub von außen nicht in das System eindringen können, da die Lippe des Dichtrings 90 gegen das Teil 84 gepresst wird. Auf diese Weise kann ein kostengünstiges System geschaffen werden, welches widerstandsfähig gegen Umwelteinflüsse ist und für nahezu alle Motorvarianten eingesetzt werden kann.

Die Erfindung ist nicht an eine Dichtung in radialer Bauform gebunden. Die Dichtlippe kann auch in axialer Richtung angebracht werden.

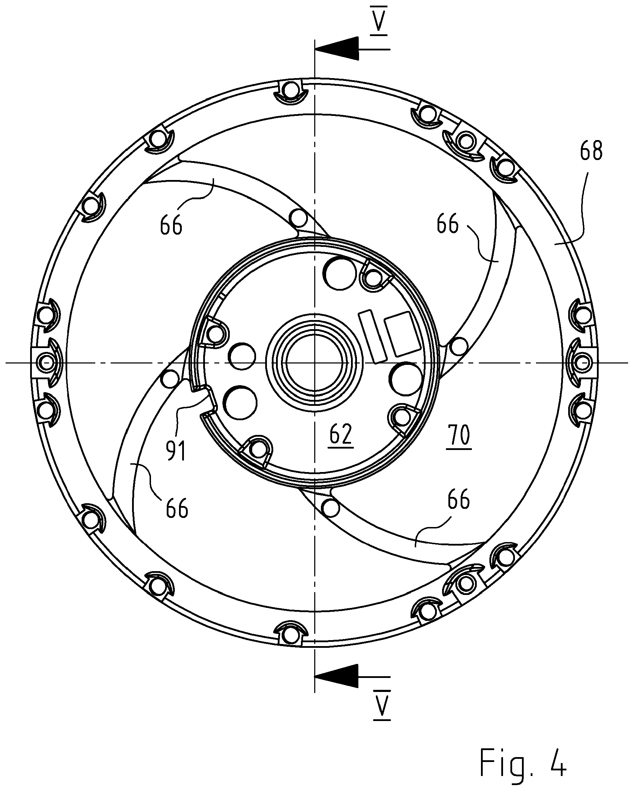

**Fig. 4** zeigt eine seitliche Öffnung 91 am Flansch 62.

Diese dient zum Durchführen der Litzen für den Anschluss des Motors 20 und wird nach dem Durchführen der Litzen in geeigneter Weise verschlossen (nicht dargestellt), z.B. durch Verguss oder Dichtungsmasse.

Naturgemäß sind im Rahmen der vorliegenden Erfindung vielfache weitere Abwandlungen und Modifikationen möglich.

Die gezeigte Lageranordnung ist bevorzugt, es kann aber auch eine andere Lageranordnung verwendet werden, z.B. mit einem Sinterlager.

Die Figuren und die zugehörige Beschreibung zeigen einen elektronisch kommutierten Außenläufermotor nach Anspruch 1.

Bevorzugt ist die Leiterplatte 170 mit elektronischen Bauelementen 172 bestückt.

Bevorzugt ist das Lagerrohr 52 an mindestens einem Ende verschlossen, um den Eintritt von Verunreinigungen in das Lagerrohr 52 mindestens zu behindern.

Bevorzugt ist das rotorferne Ende des Lagerrohres 52 durch ein Typenschild, eine Membran, oder dergleichen verschlossen.

Bevorzugt ist der Flansch 62 zumindest an seiner dem Dichtelement 90 zugewandten Seite als Keramikelement ausgebildet.

## Patentansprüche

1. Elektronisch kommutierter Außenläufermotor, welcher aufweist:
ein Lagerrohr (52);
einen Innenstator (162), welcher auf dem Lagerrohr (52) angeordnet ist;
einen glockenförmigen Außenrotor (22) mit einer Rotorglocke (26), welcher Außenrotor (22) durch einen magnetisch wirksamen Luftspalt (168) vom Innenstator (162) getrennt ist und einen Rotorboden (43) aufweist, wobei Lüfterflügel (24) auf der Außenseite der Rotorglocke (26) anordenbar sind;
eine dem Außenrotor (22) zugeordnete Welle (50), welche in dem Lagerrohr (52) drehbar gelagert ist;
welches Lagerrohr (52) einen rotornahen Abschnitt aufweist, der sich in axialer Richtung bis in den Bereich des Rotorbodens (43) erstreckt,
und welches Lagerrohr einen rotorfernen Abschnitt aufweist, der sich in axialer Richtung vom rotornahen Abschnitt weg erstreckt;
einen am rotorfernen Abschnitt des Lagerrohres (52) vorgesehenen Flansch (62);
und ein mit einer Dichtlippe versehenes Dichtelement (90), welches zwischen dem Flansch (62) und dem Außenrotor (22) angeordnet ist, wobei die Dichtlippe mit der Rotorglocke (26) zusammen wirkt, und wobei zwischen dem Innenstator (162) und dem Flansch (62) eine Leiterplatte (170) angeordnet ist, wobei das Dichtelement (90) in einem an einem Flanschende (86) des dem Innenstator (162) zugewandten Endbereichs des Flansches (62) außen radial umlaufenden Sitz (88) zwischen einem von der Rotorglocke (26) gebildeten Fortsatz (84) und dem Flanschende (86) eingebracht ist und die Dichtlippe als eine radial schräg nach außen verlaufende flexible Lippe ausgebildet ist, die gegen eine radiale Innenseite des Fortsatzes (84) anliegt, wobei im Betrieb des Motors (20) die Dichtlippe durch einen mittels der Lüfterflügel (24) erzeugten Druckunterschied (p2 - p1) gegen die Innenseite (92) des Fortsatzes (84) gepresst wird, und wobei keine Feuchtigkeit oder Staub von außen in den Motor (20) eindringen können, da die Dichtlippe gegen den Fortsatz (84) gepresst wird.

2. Motor nach Anspruch 1, bei welchem das Dichtelement (90) mit der Innenseite der Rotorglocke (26) zusammen wirkt.

3. Motor nach Anspruch 1, bei welchem die Leiterplatte (170) mit elektronischen Bauelementen (172) bestückt ist.

4. Motor nach einem der vorhergehenden Ansprüche, bei welchem das Lagerrohr (52) an mindestens einem Ende verschlossen ist, um den Eintritt von Verunreinigungen in das Lagerrohr (52) mindestens zu behindern.

5. Motor nach Anspruch 4, bei welchem das rotorferne Ende des Lagerrohres (52) durch ein Typenschild, eine Membran, oder dergleichen verschlossen ist.

6. Motor nach einem der vorhergehenden Ansprüche, bei welchem der Flansch (62) zumindest an seiner dem Dichtelement (90) zugewandten Seite als Keramikelement ausgebildet ist.

## Claims

1. An electronically commutated external rotor motor, which includes:
a bearing tube (52);
an internal stator (162), which is arranged on the bearing tube (52);
a bell-shaped external rotor (22) having a rotor bell (26), which external rotor (22) is separated by a magnetically active air gap (168) from the internal stator (162) and
has a rotor base (43), wherein fan blades (24) can be arranged on the outside of the rotor bell (26);
a shaft (50) associated with the external rotor (22), which is rotatably mounted in the bearing tube (52);
which bearing tube (52) has a rotor-proximal section, which extends in the axial direction up into the region of the rotor base (43).
and which bearing tube has a rotor-remote section, which extends in the axial direction away from the rotor-proximal section;
a flange (62) provided on the rotor-remote section of the bearing tube (52);
and a seal element (90) provided with a seal lip, which element is arranged between the flange (62) and the outer rotor (22), wherein the seal lip interacts with the rotor bell (26), and wherein a printed circuit board (170) is arranged between the internal stator (162) and the flange (62), wherein the seal element (90) is introduced into a seat (88), which is radially circumferential on an outside at a flange end (86) of the end region of the flange (62) facing toward the internal stator (162), between an extension (84) formed by the rotor bell (26) and the flange end (86), and the seal lip is formed as a flexible lip extending radially diagonally outward, which presses against a radial inside of the extension (84), wherein, during operation of the motor (20), the seal lip is pressed by a pressure difference (p2 - p1) generated by means of the fan blades (24) against the inside (92) of the extension (84), and wherein no moisture or dust can penetrate from the outside into the motor (20), since the seal lip is pressed against the extension (84).

2. The motor as claimed in claim 1, in which the seal element (90) interacts with the inside of the rotor bell (26).

3. The motor as claimed in claim 1, in which the printed circuit board (170) is equipped with electronic components (172).

4. The motor as claimed in any one of the preceding claims, in which the bearing tube (52) is closed on at least one end in order to at least obstruct the entry of contaminants into the bearing tube (52).

5. The motor as claimed in claim 4, in which the rotor-remote end of the bearing tube (52) is closed by a nameplate, a membrane, or the like.

6. The motor as claimed in any one of the preceding claims, in which the flange (62) is formed as a ceramic element at least on its side facing toward the seal element (90).

## Revendications

1. Moteur à rotor extérieur commuté électroniquement, lequel présente :
un tube formant palier (52) ;
un stator intérieur (162), lequel est agencé sur le tube formant palier (52) ;
un rotor extérieur (22) en forme de cloche avec une cloche de rotor (26), lequel rotor extérieur (22) est séparé du stator intérieur (162) par un entrefer magnétique (168) et présente un fond de rotor (43), dans lequel des pales de ventilateur (24) peuvent être agencées sur le côté extérieur de la cloche de rotor (26) ;
un arbre (50) associé au rotor extérieur (22), lequel est logé de manière rotative dans le tube formant palier (52) ;
lequel tube formant palier (52) présente une section proche du rotor, qui s'étend dans la direction axiale jusque dans la zone du fond de rotor (43),
et lequel tube formant palier présente une section éloignée du rotor, qui s'éloigne de la section proche du rotor dans la direction axiale ;
une bride (62) prévue au niveau de la section éloignée du rotor du tube formant palier (52) ;
et un élément d'étanchéité (90) doté d'une lèvre d'étanchéité, lequel est agencé entre la bride (62) et le rotor extérieur (22), dans lequel la lèvre d'étanchéité coopère avec la cloche de rotor (26), et dans lequel un circuit imprimé (170) est agencé entre le stator intérieur (162) et la bride (62), dans lequel l'élément d'étanchéité (90) est introduit dans un siège (88) circonférentiel radialement à l'extérieur au niveau d'une extrémité de bride (86) de la zone d'extrémité tournée vers le stator intérieur (162) de la bride (62) entre un prolongement (84) formé par la cloche de rotor (26) et l'extrémité de bride (86) et la lèvre d'étanchéité est réalisée en tant que lèvre flexible s'étendant radialement en biais vers l'extérieur, qui s'applique contre un côté intérieur radial du prolongement (84), dans lequel pendant le fonctionnement du moteur (20), la lèvre d'étanchéité est pressée contre le côté intérieur (92) du prolongement (84) par une différence de pression (p2 - p1) générée au moyen des pales de ventilateur (24), et
dans lequel aucune humidité ou poussière de l'extérieur ne peut pénétrer dans le moteur (20), étant donné que la lèvre d'étanchéité est pressée contre le prolongement (84).

2. Moteur selon la revendication 1, dans lequel l'élément d'étanchéité (90) coopère avec le côté intérieur de la cloche de rotor (26).

3. Moteur selon la revendication 1, dans lequel le circuit imprimé (170) est équipé de composants électroniques (172).

4. Moteur selon l'une quelconque des revendications précédentes, dans lequel le tube formant palier (52) est fermé à au moins une extrémité pour au moins empêcher l'entrée d'impuretés dans le tube formant palier (52).

5. Moteur selon la revendication 4, dans lequel l'extrémité éloignée du rotor du tube formant palier (52) est fermée par une plaque signalétique, une membrane ou similaire.

6. Moteur selon l'une quelconque des revendications précédentes, dans lequel la bride (62) est réalisée au moins sur son côté tourné vers l'élément d'étanchéité (90) en tant qu'élément céramique.
